# EUROPÄISCHE PATENTSCHRIFT

(11) **EP 3 556 599 B1**
(45) Veröffentlichungstag und Bekanntmachung des Hinweises auf die Patenterteilung: **20.10.2021**
(21) Anmeldenummer: 19169607.9
(22) Anmeldetag: 16.04.2019
(51) Int. Cl.: B60L 53/10, B60L 53/31, B60L 53/30, H02J 1/00

(54) **WALLBOX**
WALL BOX
COFFRET MURAL

(30) Priorität: 20.04.2018 DE 102018003304
(43) Veröffentlichungstag der Anmeldung: 23.10.2019
(73) Patentinhaber: ads-tec Energy GmbH, 72622 Nürtingen (DE)
(72) Erfinder: Speidel, Thomas, D-71706 Markgröningen (DE)
(74) Vertreter: Wasmuth, Rolf

(56) Entgegenhaltungen:
- EP-A1- 2 110 923
- WO-A1-2011/019855
- US-A1- 2013 020 993
- Dominic A. Savio ET AL: "Photovoltaic Integrated Hybrid Microgrid Structured Electric Vehicle Charging Station and Its Energy Management Approach", Energies, vol. 12, no. 1, 4 January 2019 (2019-01-04), page 168, XP055738309, DOI: 10.3390/en12010168
- SAHOO JAYANT KUMAR ET AL: "Design of a ZCS full - Bridge DC - DC converter for PV based electric vehicle fast charging station", 2017 IEEE REGION 10 SYMPOSIUM (TENSYMP), IEEE, 14 July 2017 (2017-07-14), pages 1-5, XP033227454, DOI: 10.1109/TENCONSPRING.2017.8070079 [retrieved on 2017-10-16]
- Pablo Garcia-Trivino ET AL: "Control of electric vehicles fast charging station supplied by PV/energy storage system/grid", 2016 IEEE International Energy Conference (ENERGYCON), 1 April 2016 (2016-04-01), pages 1-6, XP055738258, DOI: 10.1109/ENERGYCON.2016.7514120 ISBN: 978-1-4673-8463-6
- Ev4 Llc: "EV4 & ETM(TM) Charging Station - Ev4 Website", , 1 January 2016 (2016-01-01), pages 1-4, XP055738302, Retrieved from the Internet: URL:https://ev4.website/ev4-etm-charging-s tation/ [retrieved on 2020-10-09]

## Beschreibung

Die Erfindung betrifft eine Wallbox zum Aufladen von mobilen Akkupacks insbesondere von Kraftfahrzeugen. Die Wallbox wird zur Bereitstellung eines Ladestroms über eine Versorgungsleitung an eine Energiequelle angeschlossen und stellt ihrerseits einen Ladeanschluss zur elektrischen Verbindung mit dem mobilen Akkupack des Fahrzeugs bereit. Im Gehäuse der Wallbox ist ein Spannungswandler vorgesehen, der das Spannungsniveau der Energiequelle an eine Ladespannung des Akkupacks anpasst. Über einen weiteren elektrischen Anschluss wird die Wallbox mit Betriebsstrom versorgt. Über eine Kommunikationsverbindung tauscht der Wallboxcontroller mit dem Batteriespeichersystem Daten aus.

Eine bekannte Wallbox kann an ein öffentliches Versorgungsnetz angeschlossen sein, wobei aufgrund der festliegenden Wechselspannung des öffentlichen Netzes bei hohen Ladeleistungen die Versorgungsleitungen zur Wallbox entsprechend stark dimensioniert sein müssen. Darüber hinaus wird meist eine zusätzliche Kommunikationsverbindung als Drahtverbindung oder drahtlose Verbindung zwischen der Wallbox und einer zentralen Steuerung installiert.

Da die Ladezeiten immer kürzer werden sollen, verfügen die Ladeanschlüsse über Leistungen von z. B. 20 kW, 40 kW oder höher. Dies führt zu entsprechend hohen Strömen in der Versorgungsleitung. Wachsende Ladeleistungen haben zu höheren Ladespannungen bis in den Hochvoltbereich von 300 Volt bis 1000 Volt geführt. Eine bekannte Wallbox weist einen Hochvoltanschluss zur Bereitstellung der Ladeleistung und zusätzlich eine Spannungsversorgung aus dem öffentlichen Netz von z. B. 230 Volt AC auf.

Aus der WO 2011/019855 A1 ist eine komplexe Ladevorrichtung für den Akku eines Kraftfahrzeuges bekannt, bei dem die verschiedenen Baugruppen gemeinsam an einem Standort vorgesehen sind. Ist der Ladepunkt vom Standort entfernt vorgesehen, müssen entsprechende Leitungsverbindungen zum Ladepunkt installiert werden. Dies ist mit hohem Aufwand verbunden.

Aus der Literaturstelle Dominic A. Savio ET AL: "Photovoltaic lntegrated Hybrid Microgrid Structured Electric Vehicle Charging Station and its Energy Management Approach", Energies, Bd. 12 (2019-01-04), Seite 168, XP055738309 geht eine Wallbox mit einem Gehäuse als bekannt hervor, in dem ein Wallboxcontroller und ein DC/DC-Wandler angeordnet sind. Der Wallboxcontroller kommuniziert mit einem Batteriespeichersystem, wobei eine elektrische Versorgungsleitung eine Gleichstromleitung ist, aus der der Ladestrom für den Ladeanschluss gespeist ist.

Die Erfindung liegt die Aufgabe liegt zugrunde, den Installationsaufwand zur Montage einer Wallbox zu reduzieren und eine vereinfachte Verbindung zwischen der Wallbox und dem Batteriespeichersystem bereitzustellen.

Die Aufgabe wird nach den Merkmalen des Anspruchs 1 gelöst. Die als Gleichstromleitung ausgebildete Versorgungsleitung führt aus dem Batteriespeichersystem eine Gleichspannung zu, die im Hochvoltbereich von 300 Volt DC bis 1000 Volt DC, insbesondere 650 Volt DC bis 850 Volt DC liegt. Innerhalb der Wallbox wird die anliegende Gleichspannung über einen ersten DC/DC-Wandler an eine Ladespannung des mobilen Akkupacks angepasst. Die an die Wallbox angeschlossene elektrische Versorgungsleitung bildet die einzige elektrische Versorgungsleitung, aus der einerseits der Betriebsstrom für die Wallbox und andererseits der Ladestrom für den Ladeanschluss gespeist sind. Weitere elektrische Versorgungsanschlüsse entfallen.

Es ist vorgesehen, die Gleichstromleitung zur elektrischen Energieversorgung der Wallbox und die Kommunikationsverbindung zwischen dem Wallboxcontroller und dem Batteriespeichersystem als gemeinsame elektrische Zweidrahtleitung auszubilden. Dadurch ist lediglich ein einfaches Kabel zur Installation der Wallbox nötig, welches einerseits die Energie von dem Batteriespeichersystem zur Wallbox führt und andererseits eine Kommunikationsverbindung zwischen der Wallbox und dem Batteriespeichersystem herstellt.

Zur Bereitstellung der Betriebsspannung für die Komponenten der Wallbox ist die Gleichstromleitung innerhalb des Gehäuses der Wallbox mit einem zweiten DC/DC-Wandler verbunden, der die Hochvoltspannung der Gleichstromleitung auf die erforderliche Betriebsspannung absenkt.

Innerhalb des Gehäuses der Wallbox ist die Gleichstromleitung mit zumindest einem Kommunikationsmodul verbunden, welches die Kommunikation mit dem Wallboxcontroller herstellt. Innerhalb des Batteriespeichersystems ist ein Kommunikationsmodul vorgesehen, welches eine Datenverbindung über die Gleichstromleitung und dem Batteriespeichersystem sowie vorteilhaft zu einer zentralen Steuerung herstellt.

Die Kommunikationsverbindung über die Gleichstromleitung ist insbesondere als Powerline-Datenverbindung ausgebildet.

Als Batteriespeichersystem wird eine Anordnung aus Batterien verstanden, die unmittelbar und/oder über einen DC/DC-Wandler an die Versorgungsleitung angeschlossen sind. Ein derartiges System bildet insbesondere einen stationären Batteriespeicher, der zweckmäßig als Hochvoltspeicher mit einer Gleichspannung von mehr als 100 Volt ausgebildet ist. Das Batteriespeichersystem stellt über einen DC/DC-Wandler mittelbar oder unmittelbar an der Batterie eine Gleichspannung von 300 Volt DC bis 1000 Volt DC, vorteilhaft von 400 Volt DC bis 800 Volt DC, insbesondere von 650 Volt DC bis 850 Volt DC bereit.

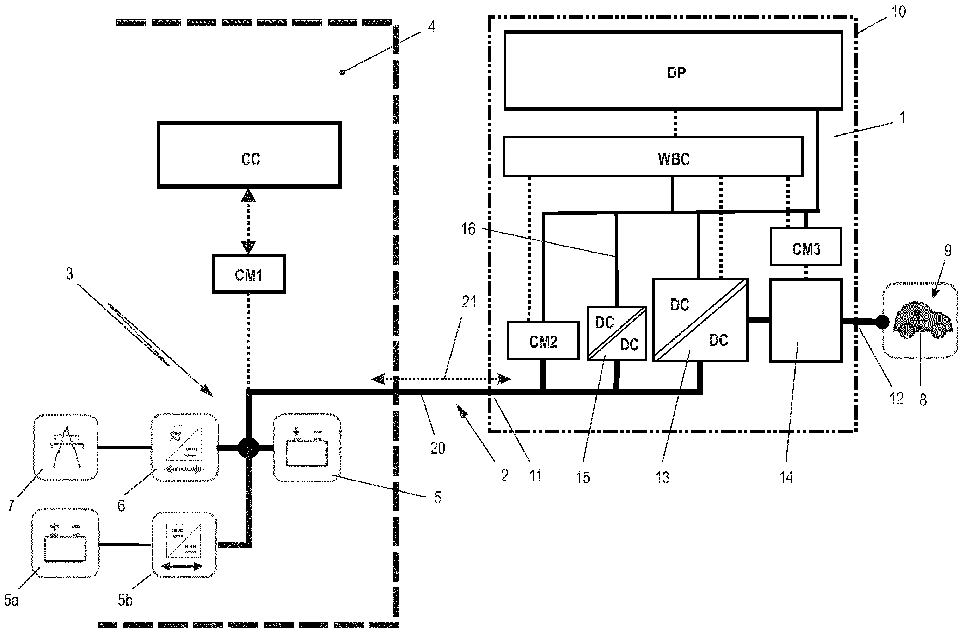

Weitere Merkmale der Erfindung ergeben sich aus den weiteren Ansprüchen, der Beschreibung und der Zeichnung, in der ein schematisches Ausführungsbeispiel der Erfindung dargestellt ist, welches nachfolgend im Einzelnen beschrieben ist.

In der Zeichnung ist schematisch der Aufbau einer Wallbox 1 wiedergegeben, die über eine Versorgungsleitung 2 mit einem insbesondere stationären Batteriespeichersystem 3 verbunden ist.

Als Batteriespeichersystem 3 wird eine Anordnung aus Batterien 5, 5a verstanden, die unmittelbar und/oder über einen DC/DC-Wandler 5b an die Versorgungsleitung 2 angeschlossen sind. Ein derartiges System ist insbesondere aus einem stationären Batteriespeicher 5, 5a gebildet, der zweckmäßig als Hochvoltspeicher mit einer Gleichspannung von mehr als 100 Volt ausgebildet ist. Das Batteriespeichersystem 3 stellt über die Batterie 5a und den vorzugsweise galvanisch trennenden DC/DC-Wandler 5a mittelbar und/oder durch direkten Anschluss der Batterie 5 an die Versorgungsleitung 3 unmittelbar eine Gleichspannung von 300 Volt DC bis 1000 Volt DC, vorteilhaft von 400 Volt DC bis 800 Volt DC, insbesondere von 650 Volt DC bis 850 Volt DC zur Verfügung.

Die Wallbox 1 kann z. B. an einer Wand, insbesondere einer Außenwand eines Gebäudes 4 angeordnet sein, während das stationäre Batteriespeichersystem 3 vorteilhaft innerhalb eines Aufnahmeraums, eines Gebäudes 4 oder dergleichen vorgesehen ist. Die Versorgungsleitung 2 verbindet dabei das innenliegende Batteriespeichersystem 3 mit der außenliegenden Wallbox 1.

Das Batteriespeichersystem 3 kann aus einer Anordnung von mehreren wiederaufladbaren Batterien 5 und 5a bestehen, wie sie in der Zeichnung schematisch dargestellt sind. Die Batterien 5 werden über einen AC/DC-Wandler 6 aus einem Versorgungsnetz 7 geladen. Die Batterien 5a werden über den AC/DC-Wandler 6 und den bidirektionalen DC/DC-Wandler 5b aufgeladen. Das Versorgungsnetz 7 kann ein öffentliches Netz oder ein Versorgungsnetz des Gebäudes 4 sein. Vorzugsweise ist der AC/DC-Wandler 6 dazu ausgelegt, dass bei Bedarf auch Energie aus dem Batteriespeichersystem 3 in das Versorgungsnetz 7 zurückgespeist werden kann.

Der Batteriespeichersystem 3 steht über ein Kommunikationsmodul CM1 mit einer zentralen Steuerung CC in Verbindung. Die zentrale Steuerung CC kann eine übergeordnete Haussteuerung sein; die zentrale Steuerung CC steuert insbesondere die Funktion des Batteriespeichersystems 3, z. B. das Entladen und das Laden der Batterien 5, 5a.

Die Wallbox 1 besteht aus einem Gehäuse 10, das einerseits einen Versorgungsanschluss 11 und andererseits einen Ladeanschluss 12 aufweist. Über den Ladeanschluss 12 ist ein mobiler Akkupack 8 zu laden, der in einem Fahrzeug 9, insbesondere in einem Kraftfahrzeug, einem Lieferfahrzeug oder einem Lastkraftwagen angeordnet ist. In der Zeichnung ist das Fahrzeug 9 schematisch als Kraftfahrzeug wiedergegeben.

Im Gehäuse 10 der Wallbox 1 ist ein Wallboxcontroller WBC vorgesehen, der mit einem Display DP, einem RFID-Leser, einem WLAN-Modul, einem Bluetooth-Modul, einem NFC-Modul oder dergleichen ausgestattet sein kann. So kann über eine WLAN-App, eine Bluetooth-Verbindung, eine NFC-Verbindung oder dgl. eine Nutzerkennung erfolgen. Eine Bedienung der Wallbox durch einen Benutzer ist erst nach dessen eindeutiger Identifizierung möglich.

Der Wallboxcontroller steht innerhalb der Wallbox 1 in Kommunikationsverbindung mit einem Kommunikationsmodul CM2, welches an die Versorgungsleitung 2 angeschlossen ist. Ferner steht der Wallboxcontroller WBC in Kommunikationsverbindung mit einem insbesondere galvanisch getrennten DC/DC-Wandler 13, der über ein Schutzmodul 14 am Ladeanschluss 12 eine Ladespannung einem mobilen Akkupack 8 zur Verfügung stellt.

Über einen weiteren insbesondere galvanisch trennenden DC/DC-Wandler, der an die Versorgungsleitung 2 angeschlossen ist, wird ein Versorgungsnetz 16 mit einer Betriebsspannung für die verschiedenen elektronischen Baugruppen der Wallbox 1 zur Verfügung gestellt.

Die insbesondere zweiadrige Versorgungsleitung 2 stellt somit einerseits die zum Laden eines mobilen Akkupacks 8 notwendige Energie und andererseits die zum elektrischen Betrieb der Wallbox 1 erforderliche elektrische Energie zur Verfügung.

Die Versorgungsleitung 2 ist insbesondere als zweiadrige Gleichstromleitung 20 ausgebildet, die eine Gleichspannung des Batteriespeichersystems 3 der Wallbox 1 zuführt. Das Batteriespeichersystem 3 ist bevorzugt ein Hochvoltspeicher mit mehr als 100 Volt, insbesondere ein Batteriespeichersystem mit einer Gleichspannung von 300 Volt DC bis 1000 Volt DC. Vorzugsweise hat das Batteriespeichersystem 3 eine Ausgangsspannung von mehr als 300 Volt DC, insbesondere eine Ausgangsspannung von 650 Volt DC bis 850 Volt DC.

Die Gleichstromleitung 20 ist insbesondere als Leitung mit zwei stromführenden Adern, insbesondere als Zweidrahtleitung ausgelegt, wobei über die Gleichstromleitung 20 als einzige elektrische Leitungsverbindung zwischen dem Batteriespeichersystem 3 und der Wallbox 1 einerseits die elektrische Energie zum Laden des mobilen Akkupacks 8 und andererseits die elektrische Energie zum elektrischen Betrieb der Wallbox 1 zugeführt wird.

Zweckmäßig ist vorgesehen, über die Gleichstromleitung 2 zugleich eine Drahtverbindung als Kommunikationsverbindung zwischen der Wallbox 1 und dem Batteriespeichersystem 3 herzustellen. Diese Kommunikationsverbindung 21 ist insbesondere eine Powerline-Verbindung, die eine Datenübertragung durch Aufmodulieren eines Frequenzsignals auf der Gleichstromleitung herstellt. Die Kommunikationsverbindung 21 ist vorzugsweise bidirektional.

Da die Versorgungsleitung 2 als Gleichstromleitung 20 und zugleich als Kommunikationsverbindung 21 genutzt wird, ist der Installationsaufwand einer Wallbox 1 gegenüber herkömmlichen Wallboxen signifikant reduziert. Da darüber hinaus vorteilhaft eine Gleichspannung von z. B. 650 Volt bis 850 Volt genutzt wird, fließt bei einer Ladeleistung von z. B. 20 kW ein nur geringer Strom von ca. 30 A oder weniger, so dass der erforderliche Leitungsquerschnitt der Zweidrahtleitung klein ausgelegt werden kann. An die Gleichstromleitung 20 sind zur Daten-übermittlung Kommunikationsmodule CM1, CM2, CM3 und der Wallboxcontroller WBC angeschlossen, wobei über das Kommunikationsmodul CM3 eine Kommunikation mit dem an dem Ladeanschluss 12 angeschlossenen Kraftfahrzeug 9 hergestellt ist. Die Datenverbindung kann so ausgelegt sein, dass alle Kommunikationsmodule CM1, CM2, CM3 und der Wallboxcontroller WBC mit der zentralen Steuerung CC beliebig kommunizieren können. Alle Module werden über den zweiten DC/DC-Wandler mit der notwendigen Betriebsspannung versorgt, die vorzugsweise als Kleinspannung von insbesondere weniger als 48 V ausgelegt ist.

## Patentansprüche

1. Wallbox zum Aufladen von mobilen Akkupacks aus einem Batteriespeichersystem (3), wobei die Wallbox (1) ein Gehäuse (10) mit einem Versorgungsanschluss (11) und einem Ladeanschluss (12) aufweist, und in dem Gehäuse (10) der Wallbox (1) ein Wallboxcontroller (WBC) angeordnet ist, wobei das Batteriespeichersystem (3) mit einer Versorgungsleitung (2) an den Versorgungsanschluss (11) der Wallbox (1) angeschlossen ist, und der Ladeanschluss (12) der Wallbox (1) zur elektrischen Verbindung mit dem mobilen Akkupack (8) ausgebildet ist, und mit einem in dem Gehäuse (10) der Wallbox (1) angeordneten DC/DC-Wandler (13), der eine über die Versorgungsleitung (2) aus dem Batteriespeichersystem (3) zugeführte Gleichspannung an eine Ladespannung des mobilen Akkupacks (8) anpasst, sowie mit einer Kommunikationsverbindung (21) zwischen dem Wallboxcontroller (WBC) und dem Batteriespeichersystem (3), wobei die einzige an die Wallbox (1) angeschlossene elektrische Versorgungsleitung (2) eine Gleichstromleitung (20) ist, und die Gleichstromleitung (20) eine Zweidrahtleitung ist, aus der der Ladestrom für den Ladeanschluss (12) gespeist ist,
**dadurch gekennzeichnet, dass** die Gleichstromleitung (20) den Betriebsstrom für die Wallbox (1) zuführt und zur elektrischen Energieversorgung und Kommunikationsverbindung (21) zwischen der Wallbox (1) und dem Batteriespeichersystem (3) als gemeinsame Leitung ausgebildet ist.

2. Wallbox nach Anspruch 1,
**dadurch gekennzeichnet, dass** die Gleichstromleitung (20) innerhalb des Gehäuses (10) der Wallbox (1) mit einem zweiten DC/DC-Wandler (15) zur Bereitstellung einer Betriebsspannung (16) für die Wallbox (1) verbunden ist.

3. Wallbox nach Anspruch 1,
**dadurch gekennzeichnet, dass** die Gleichstromleitung (20) zur elektrischen Energieversorgung und die Kommunikationsverbindung (21) zwischen dem Wallboxcontroller (WBC) und dem Batteriespeichersystem (3) als gemeinsame Leitung ausgebildet sind.

4. Wallbox nach Anspruch 3,
**dadurch gekennzeichnet, dass** die Gleichstromleitung (20) innerhalb des Gehäuses (10) der Wallbox (1) mit einem Kommunikationsmodul (CM2) verbunden ist.

5. Wallbox nach Anspruch 3,
**dadurch gekennzeichnet, dass** ein innerhalb des Batteriespeichersystems (3) vorgesehenes Kommunikationsmodul (CM1) mit der Gleichstromleitung (20) verbunden ist.

6. Wallbox nach Anspruch 3,
**dadurch gekennzeichnet, dass** die Kommunikationsverbindung (21) eine Powerline Verbindung ist.

7. Wallbox nach Anspruch 1,
**dadurch gekennzeichnet, dass** das Batteriespeichersystem (3) ein stationäres Batteriespeichersystem ist.

8. Wallbox nach Anspruch 1,
**dadurch gekennzeichnet, dass** das Batteriespeichersystem (3) einen Hochvolt-Speicher mit einer Gleichspannung von mehr als 300 Volt umfasst.

9. Wallbox nach Anspruch 8,
**dadurch gekennzeichnet, dass** das Batteriespeichersystem (3) eine Gleichspannung im Bereich von 300 Volt bis 1000 Volt, insbesondere von 400 Volt bis 800 Volt aufweist.

10. Wallbox nach Anspruch 1,
**dadurch gekennzeichnet, dass** der mobile Akkupack (8) in einem Fahrzeug (9) wie in einem Kraftfahrzeug, einem Lieferfahrzeug oder einem Lastkraftwagen angeordnet ist.

## Claims

1. Wall box for charging mobile battery packs from a battery storage system (3), wherein the wall box (1) has a housing (10) having a supply connection (11) and a charging connection (12), and a wall box controller (WBC) is arranged in the housing (10) of the wall box (1), wherein the battery storage system (3) is connected to the supply connection (11) of the wall box (1) by a supply line (2), and the charging connection (12) of the wall box (1) is designed for electrical connection to the mobile battery pack (8), and having a DC-to-DC converter (13) arranged in the housing (10) of the wall box (1), which DC-to-DC converter matches a DC voltage supplied from the battery storage system (3) via the supply line (2) to a charging voltage of the mobile battery pack (8), and having a communication connection (21) between the wall box controller (WBC) and the battery storage system (3), wherein the single electrical supply line (2) connected to the wall box (1) is a DC current line (20), and the DC current line (20) is a two-wire line from which the charging current for the charging connection (12) is fed,
**characterized in that** the DC current line (20) supplies the operating current for the wall box (1) and is designed as a common line for the electrical energy supply and communication connection (21) between the wall box (1) and the battery storage system (3).

2. Wall box according to claim 1,
**characterized in that** the DC current line (20) is connected, inside the housing (10) of the wall box (1), to a second DC-to-DC converter (15) for providing an operating voltage (16) for the wall box (1).

3. Wall box according to claim 1,
**characterized in that** the DC current line (20) for the electrical energy supply and the communication connection (21) between the wall box controller (WBC) and the battery storage system (3) are designed as a common line.

4. Wall box according to claim 3,
**characterized in that** the DC current line (20) is connected, inside the housing (10) of the wall box (1), to a communication module (CM2).

5. Wall box according to claim 3,
**characterized in that** a communication module (CM1) provided inside the battery storage system (3) is connected to the DC current line (20).

6. Wall box according to claim 3,
**characterized in that** the communication connection (21) is a power line connection.

7. Wall box according to claim 1,
**characterized in that** the battery storage system (3) is a stationary battery storage system.

8. Wall box according to claim 1,
**characterized in that** the battery storage system (3) comprises a high-voltage storage unit having a DC voltage of more than 300 volts.

9. Wall box according to claim 8,
**characterized in that** the battery storage system (3) has a DC voltage in the range of 300 volts to 1000 volts, in particular of 400 volts to 800 volts.

10. Wall box according to claim 1,
**characterized in that** the mobile battery pack (8) is arranged in a vehicle (9), such as in a motor vehicle, a delivery vehicle or a heavy goods vehicle.

## Revendications

1. Coffret mural pour charger des blocs d'accumulateurs mobiles issus d'un système d'accumulation à batterie (3), le coffret mural (1) possédant un boîtier (10) muni d'une borne d'alimentation (11) et d'une borne de charge (12), et un contrôleur de coffret mural (WBC) étant disposé dans le boîtier (10) du coffret mural (1), le système d'accumulation à batterie (3) étant raccordé par une ligne d'alimentation (2) à la borne d'alimentation (11) du coffret mural (1), et la borne de charge (12) du coffret mural (1) étant configurée pour la liaison électrique avec le bloc d'accumulateurs mobile (8), et comprenant un convertisseur CC/CC (13) disposé dans le boîtier (10) du coffret mural (1), lequel adapte une tension continue acheminée par le biais de la ligne d'alimentation (2) depuis le système d'accumulation à batterie (3) à une tension de charge du bloc d'accumulateurs mobile (8), et comprenant aussi une liaison de communication (21) entre le contrôleur de coffret mural (WBC) et le système d'accumulation à batterie (3), l'unique ligne d'alimentation (2) électrique raccordée au coffret mural (1) étant une ligne à courant continu (20), et la ligne à courant continu (20) étant une ligne à deux fils à partir de laquelle est alimenté le courant de charge pour la borne de charge (12),
**caractérisé en ce que** la ligne à courant continu (20) achemine le courant de service pour le coffret mural (1) et elle est réalisée sous la forme d'une ligne commune pour l'alimentation en énergie électrique et la liaison de communication (21) entre le coffret mural (1) et le système d'accumulation à batterie (3).

2. Coffret mural selon la revendication 1,
**caractérisé en ce que** la ligne à courant continu (20) est reliée, à l'intérieur du boîtier (10) du coffret mural (1), à un deuxième convertisseur CC/CC (15) destiné à fournir une tension de service (16) pour le coffret mural (1).

3. Coffret mural selon la revendication 1,
**caractérisé en ce que** la ligne à courant continu (20) est réalisée sous la forme d'une ligne commune pour l'alimentation en énergie électrique et la liaison de communication (21) entre le contrôleur de coffret mural (WBC) et le système d'accumulation à batterie (3).

4. Coffret mural selon la revendication 3,
**caractérisé en ce que** la ligne à courant continu (20), à l'intérieur du boîtier (10) du coffret mural (1), est reliée à un module de communication (CM2).

5. Coffret mural selon la revendication 3,
**caractérisé en ce qu'**un module de communication (CM1) présent à l'intérieur du système d'accumulation à batterie (3) est relié à la ligne à courant continu (20).

6. Coffret mural selon la revendication 3,
**caractérisé en ce que** la liaison de communication (21) est une liaison par courant porteur.

7. Coffret mural selon la revendication 1,
**caractérisé en ce que** le système d'accumulation à batterie (3) est un système d'accumulation à batterie fixe.

8. Coffret mural selon la revendication 1,
**caractérisé en ce que** le système d'accumulation à batterie (3) comporte un accumulateur à haute tension avec une tension continue supérieure à 300 volts.

9. Coffret mural selon la revendication 8,
**caractérisé en ce que** le système d'accumulation à batterie (3) présente une tension continue dans la plage de 300 volts à 1000 volts, notamment de 400 volts à 800 volts.

10. Coffret mural selon la revendication 1,
**caractérisé en ce que** le bloc d'accumulateurs mobile (8) est disposé dans un véhicule (9), tel qu'un véhicule autonomie, un véhicule de livraison ou un poids-lourd.
